# EUROPÄISCHE PATENTSCHRIFT

(11) **EP 3 320 054 B1**
(45) Veröffentlichungstag und Bekanntmachung des Hinweises auf die Patenterteilung: **08.04.2020**
(21) Anmeldenummer: 16732244.5
(22) Anmeldetag: 07.06.2016
(51) Int. Cl.: C09K 11/02, C09K 11/66, C09K 11/64, G03B 21/00, C09K 11/73

(54) **VERBUNDMATERIAL MIT EINEM IN EINE TRANSPARENTE MATRIX EINGEBETTETEN PHOTOLUMINESZENZMATERIAL**
COMPOSITE MATERIAL WITH PHOTOLUMINESCENT MATERIAL EMBEDDED IN A TRANSPARENT MATRIX
MATÉRIAU COMPOSITE COMPRENANT UN MATÉRIAU À PHOTOLUMINESCENCE INCORPORÉ DANS UNE MATRICE TRANSPARENTE

(30) Priorität: 06.07.2015 DE 102015212595
(43) Veröffentlichungstag der Anmeldung: 16.05.2018
(73) Patentinhaber: OSRAM GmbH, 80807 München (DE)
(72) Erfinder: FRISCHEISEN, Jörg, 86830 Schwabmünchen (DE)
(74) Vertreter: Epping - Hermann - Fischer
(86) Internationale Anmeldenummer: PCT/EP2016/062912
(87) Internationale Veröffentlichungsnummer: WO 2017/005436

(56) Entgegenhaltungen:
- US-A1- 2007 273 282
- US-A1- 2008 094 691
- US-A1- 2012 261 704
- WU ZHAN-CHAO ET AL: "Preparation and thermally stable luminescence properties of a new blue Sr5Cl0.75F0.25(PO4)3: Eu2+phosphor for WLEDs", JOURNAL OF ALLOYS AND COMPOUNDS, ELSEVIER SEQUOIA, LAUSANNE, CH, vol. 644, 28 April 2015 (2015-04-28), pages 274-279, XP029233129, ISSN: 0925-8388, DOI: 10.1016/J.JALLCOM.2015.04.124

## Beschreibung

Die Erfindung betrifft ein Verbundmaterial mit wenigstens einem Photolumineszenzmaterial, welches als Leuchtmittel in eine transparente Matrix eingebettet ist. Die Erfindung betrifft weiterhin eine Anzeigeeinrichtung mit einem solchen Verbundmaterial sowie ein Verfahren zum Betreiben einer derartigen Anzeigeeinrichtung.

Aus der Druckschrift US 2007/273282 A1 ist eine optoelektronische Vorrichtung bekannt, die ein Verbundmaterial aufweist, das ein Photolumineszenzmaterial und ein Matrixmaterial umfasst.

In vielen täglichen Anwendungsbereichen besteht der Wunsch, bedarfsweise Informationen wie Logos, Bilder, Texte und dergleichen großflächig auf Schaufensterflächen, Hausfassaden, Fahrzeugscheiben und so weiter bereitstellen zu können. Dabei ist es weiterhin wünschenswert, dass sich die Oberfläche, auf der diese Informationen präsentiert werden sollen, im ausgeschalteten Zustand, das heißt wenn die Informationen nicht angezeigt werden, optisch nicht oder möglichst wenig von ähnlichen Oberflächen unterscheidet, die nicht zu einer solchen Informationsdarstellung geeignet sind. Beispielsweise soll es im ausgeschalteten Zustand möglichst nicht erkennbar sein, dass eine Schaufensterscheibe zu einer derartigen Informationsdarstellung in der Lage ist.

Bislang wurden für diese Anwendungsbereiche überwiegend transparente organische Leuchtdioden (organic light emitting diode, OLED) als leuchtfähiges Verbundmaterial verwendet. Mit Hilfe solcher OLEDs ist es beispielsweise möglich, dass eine entsprechend ausgestattete Schaufensterscheibe im eingeschalteten bzw. angeregten Zustand der OLED Informationen präsentiert, im ausgeschalteten bzw. nicht-angeregten Zustand der OLED aber weiterhin zumindest eingeschränkt transparent, das heißt für elektromagnetische Strahlung im für den Menschen sichtbaren Spektralbereich von etwa 380 nm bis etwa 780 nm teilweise durchlässig ist.

Als nachteilig an den derzeit verfügbaren OLEDs ist aber der Umstand anzusehen, dass deren Anwendung auf relativ kleine Flächen deutlich unter 1 m² beschränkt ist. Darüber hinaus reduzieren OLEDs aufgrund der erforderlichen Elektrodenschichten die Transparenz von Trägermaterialien wie Glas, Acrylglas, Kunststoffen etc. vergleichsweise stark. Damit ist die zur Lichtemission fähige Fläche auch im ausgeschalteten Zustand erkennbar und besitzt eine milchige, das heißt eine nur eingeschränkt transparente und häufig gelbliche Anmutung.

Eine bekannte Alternative zur Verwendung von OLEDs besteht darin, Licht auf ein Trägermaterial wie Glas oder dergleichen zu projizieren, das mit einer Streuschicht versehen ist, um das einfallende Licht gezielt zu streuen bzw. zu reflektieren. Die Streuschicht kann dabei im Vergleich zu OLEDs wesentlich großflächiger sein.

Allerdings führen solche Streuschichten zwangsläufig zu einer starken Veränderung der optischen Anmutung, so dass beispielsweise entsprechend ausgestattete Glasflächen nicht mehr transparent, sondern milchig bzw. transluzent erscheinen.

Aufgabe der vorliegenden Erfindung ist es, ein leuchtfähiges Verbundmaterial bereitzustellen, welches zur großflächigen Darstellung von Informationen geeignet und wenigstens im ausgeschalteten bzw. nicht-angeregten Zustand zumindest im Wesentlichen transparent ist. Weitere Aufgaben der Erfindung bestehen darin, eine Anzeigeeinrichtung mit einem solchen Verbundmaterial sowie ein Verfahren zum Betreiben einer derartigen Anzeigeeinrichtung bereitzustellen.

Die Aufgaben werden erfindungsgemäß durch ein Verbundmaterial mit den Merkmalen des Anspruchs 1, durch eine Anzeigeeinrichtung gemäß Anspruch 8 sowie durch ein Verfahren gemäß Anspruch 15 zum Betreiben einer solchen Anzeigeeinrichtung gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verbundmaterials als vorteilhafte Ausgestaltungen der Anzeigeeinrichtung bzw. des Verfahrens und umgekehrt anzusehen sind.

Ein erster Aspekt der Erfindung betrifft ein Verbundmaterial, umfassend wenigstens ein Photolumineszenzmaterial, welches als Leuchtmittel in eine transparente Matrix eingebettet ist, wobei es erfindungsgemäß vorgesehen ist, dass ein Brechungsindex des wenigstens einen Photolumineszenzmaterials und ein Brechungsindex der Matrix eine Differenz von höchstens ±0,2 aufweisen. Indem die transparente Matrix in einer Weise gewählt ist, dass ihr Brechungsindex nahe am Brechungsindex des Photolumineszenzmaterials liegt, ist das erfindungsgemäße Verbundmaterial in Bezug auf die Lichtstreuung nahezu "unsichtbar", da Licht, das durch das Verbundmaterial tritt, dementsprechend nicht oder nur unwesentlich gestreut oder reflektiert wird. Daher ist das Verbundmaterial für einfallende elektromagnetische Strahlung im für Menschen sichtbaren Frequenzspektrum transparent. Unter Transparenz wird im Rahmen der vorliegenden Erfindung verstanden, dass die interne Transmission des Verbundmaterials, das heißt die Transmission ohne Berücksichtigung von Fresnel-Reflexionen an Grenzflächen, bei 20 °C und einer Schichtdicke von 1 cm für Licht im für den Menschen sichtbaren Spektralbereich mindestens 0,8, insbesondere mindestens 0,9 und vorzugsweise mindestens 0,95 beträgt. Der Gewichtsanteil des Photolumineszenzmaterials bzw. der Summe aller Photolumineszenzmaterialien am Gesamtgewicht des Verbundmaterials kann grundsätzlich frei zwischen 0,1 % und 99,9 % Gewichtsprozent gewählt sein und beispielsweise 0,1 %, 0,5 %, 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 %, 99,5 % oder 99,9 % betragen, wobei entsprechende Zwischenwerte als mitoffenbart anzusehen sind. Das wenigstens eine Photolumineszenzmaterial kann grundsätzlich fluoreszierend und/oder phosphoreszierend sein. Ebenso kann das wenigstens eine Photolumineszenzmaterial grundsätzlich ein Breitbandleuchtstoff, ein Linienleuchtstoff oder eine Mischung hieraus sein. Die Matrix kann grundsätzlich aus einem Material oder aus einem Gemisch von zwei oder mehr geeigneten Materialien bestehen, wobei das oder die Materialien der Matrix im für den Menschen sichtbaren Spektralbereich vorzugsweise nicht photolumineszieren. Unter einer Differenz von ±0,2 sind im Rahmen der vorliegenden Erfindung insbesondere Differenzen zu verstehen, die betragsmäßig beispielsweise 0,20, 0,19, 0,18, 0,17, 0,16, 0,15, 0,14, 0,13, 0,12, 0,11, 0,10, 0,09, 0,08, 0,07, 0,06, 0,05, 0,04, 0,03, 0,02, 0,01, 0,009, 0,008, 0,007, 0,006, 0,005, 0,004, 0,003, 0,002, 0,001 oder weniger betragen, wobei entsprechende Zwischenwerte als mitoffenbart anzusehen sind. Vorzugsweise ist der Betrag der Differenz der Brechungsindizes so klein wie möglich, insbesondere 0. Damit ist es einerseits möglich, das Photolumineszenzmaterial durch Beaufschlagung mit geeigneter elektromagnetischer Strahlung anzuregen, um Informationen zu präsentieren, andererseits ist das Verbundmaterial im nicht-angeregten Zustand des Photolumineszenzmaterials zumindest im Wesentlichen transparent. Durch die Verwendung des wenigstens einen Photolumineszenzmaterials ist es im Unterschied zu OLEDs zudem möglich, das Verbundmaterial zur großflächigen Präsentation von Informationen zu verwenden, da keine Elektrodenschichten oder dergleichen, sondern lediglich eine entsprechende Lichtbeaufschlagung zur Anregung des Photolumineszenzmaterials erforderlich sind. Grundsätzlich kann das Verbundmaterial aber natürlich auch nur zu Beleuchtungszwecken verwendet werden. Zur Lichtbeaufschlagung bzw. Anregung des wenigstens einen Photolumineszenzmaterials kann dabei im einfachsten Fall Sonnen- bzw. Tageslicht verwendet werden. Es können aber auch eine oder mehrere künstliche Lichtquellen bzw. Beleuchtungseinrichtungen zur Anregung des Photolumineszenzmaterials vorgesehen sein. Daher kann das Verbundmaterial besonders flexibel verwendet und geometrisch nahezu beliebig skaliert werden. In Abhängigkeit der mechanischen Eigenschaften der Matrix und der geometrischen Auslegung kann das Verbundmaterial zudem wahlweise in Alleinstellung, beispielsweise als leuchtfähiger Glasscheibenersatz verwendet oder als transparente Beschichtung auf ein zusätzliches Trägermaterial aufgebracht werden.

In einer vorteilhaften Ausgestaltung der Erfindung ist vorgesehen, dass ein Absorptionsmaximum des Photolumineszenzmaterials außerhalb des für Menschen sichtbaren Spektralbereichs liegt. Mit anderen Worten ist es erfindungsgemäß vorgesehen, dass das Photolumineszenzmaterial bei 20 °C und einer Schichtdicke von 1 cm für Licht im für den Menschen sichtbaren Spektralbereich eine maximale Absorption von höchstens 0,25, insbesondere von höchstens 0,2 und vorzugsweise von höchstens 0,1 besitzt. Damit absorbiert das Photolumineszenzmaterial praktisch nicht im sichtbaren Spektralbereich und erscheint daher im nicht-angeregten Zustand zumindest annähernd farblos bzw. weiß, so dass das Verbundmaterial nicht nur transparent, sondern auch farblos ausgebildet ist. Dies erlaubt eine optisch besonders unauffällige Ausgestaltung des Verbundmaterials im nicht-angeregten Zustand des Photolumineszenzmaterials. Beispielsweise können ein oder mehrere Photolumineszenzmaterialien vorgesehen sein, die durch für den Menschen nicht oder kaum sichtbare Strahlung wie etwa Tiefblau, Violett, nahes UV oder UV-Strahlung anregbar sind und die Transparenz des Verbundwerkstoffs nicht oder nicht nennenswert beeinträchtigen. Ein weiterer Vorteil besteht darin, dass die Anregung des Photolumineszenzmaterials entsprechend unauffällig erfolgen kann.

In einer weiteren vorteilhaften Ausgestaltung der Erfindung ist es vorgesehen, dass das Photolumineszenzmaterial aus Partikeln besteht, die einen mittleren Partikeldurchmesser ≤ 400 nm, insbesondere < 100 nm und vorzugsweise < 5 nm, und/oder einen mittleren Partikeldurchmesser ≥ 800 nm, insbesondere > 10 µm und vorzugsweise > 30 µm, aufweisen. Durch die Verwendung von Partikeln mit derartigen Partikelgrößen kann die Lichtstreuung des Verbundwerkstoffs besonders stark reduziert werden. Insbesondere hat es sich als vorteilhaft gezeigt, wenn die mittleren Partikeldurchmesser wesentlich kleiner und/oder wesentlich größer sind als die Anregungswellenlänge(n) und/oder die Emissionswellenlänge(n) des wenigstens einen Photolumineszenzmaterials. Beispielsweise können die mittleren Partikeldurchmesser um mindestens eine Zehnerpotenz kleiner und/oder größer als die maximale bzw. minimale Anregungswellenlänge(n) und/oder Emissionswellenlänge(n) des Photolumineszenzmaterials sein. Dabei haben sich insbesondere nanoskalige Photolumineszenzmaterialien als vorteilhaft gezeigt.

Weitere Vorteile ergeben sich, indem das wenigstens eine Photolumineszenzmaterial ausgewählt ist aus einer Gruppe, die anorganische Leuchtstoffe, organische Leuchtstoffe und Quantenpunkte umfasst. Hierdurch können die optischen Eigenschaften des Verbundmaterials insbesondere im Hinblick auf Anregungs- und Emissionswellenlänge(n) optimal an den jeweiligen Einsatzzweck angepasst werden. Vorzugsweise werden solche Photolumineszenzmaterialien, einzeln oder in Kombination, verwendet, die im Verbundmaterial Licht im für den Menschen sichtbaren Spektralbereich möglichst wenig streuen. Neben anorganischen und organischen Leuchtstoffen eignen sich auch Quantenpunkte, insbesondere Quantenpunkte mit einer Kern-Schale-Struktur, die den Stokes-Shift zwischen Absorption und Emission möglichst stark erhöht.

In einer weiteren vorteilhaften Ausgestaltung der Erfindung ist vorgesehen, dass das Photolumineszenzmaterial wenigstens einen anorganischen Leuchtstoff aus der Gruppe
- (M₁₋ₓEuₓ)₁₀(PO₄)₆(Cl,F)₂, in dem M aus einem oder mehreren Elementen aus der Gruppe Sr, Mg, Ca und Ba gewählt und x = 0,01-0,12 ist;
- M_{1-y}Eu_{y}MgAl₁₀O₁₇, in dem M aus einem oder mehreren Elementen aus der Gruppe Ba, Mg, Ca und Sr gewählt und y = 0,01 - 0,9 ist;
- M_{1-z}Eu_{z}MgAl₁₀O₁₇, in dem M aus einem oder mehreren Elementen aus der Gruppe Ba, Mg, Ca und Sr gewählt und z = 0,01 - 0,9 ist;
- (M₁₋ₚEuₚ)₆BP₅O₂₀, in dem M aus einem oder mehreren Elementen aus der Gruppe Sr, Mg, Ca und Ba gewählt und p = 0,01 - 0,9 ist;
- (Sr_{1-q}Eu_{q})₄Al₁₄O₂₅, in dem q = 0,01 - 0,9 ist;
- Mg₄Ge₁₋ᵣMnᵣ(O, F)₆, in dem r = 0,001-0,06 ist; oder
- M₁₋ₛEuₛ (Mg₁₋ₜMnₜ)Al₁₀O₁₇, in dem M aus einem oder mehreren Elementen aus der Gruppe Ba, Mg, Ca und Sr gewählt, s = 0,01-0,7 und t = 0,05-0,5 ist,
umfasst. In den genannten Summenformeln sind alle zwischen den jeweiligen Bereichsgrenzen liegenden Werte als mitoffenbart anzusehen. Beispielsweise umfasst die Angabe y = 0,01 - 0,9 die Werte 0,01, 0,02, 0,03, 0,04, 0,05, 0,06, 0,7, 0,08, 0,09, 0,10, 0,11, 0,12, 0,13, 0,14, 0,15, 0,16, 0,17, 0,18, 0,19, 0,20, 0,21, 0,22, 0,23, 0,24, 0,25, 0,26, 0,27, 0,28, 0,29, 0,30, 0,31, 0,32, 0,33, 0,34, 0,35, 0,36, 0,37, 0,38, 0,39, 0,40, 0,41, 0,42, 0,43, 0,44, 0,45, 0,46, 0,47, 0,48, 0,49, 0,50, 0,51, 0,52, 0,53, 0,54, 0,55, 0,56, 0,57, 0,58, 0,59, 0,60, 0,61, 0,62, 0,63, 0,64, 0,65, 0,66, 0,67, 0,68, 0,69, 0,70, 0,71, 0,72, 0,73, 0,74, 0,75, 0,76, 0,77, 0,78, 0,79, 0,80, 0,81, 0,82, 0,83, 0,84, 0,85, 0,86, 0,87, 0,88, 0,89 und 0,9 sowie entsprechende Zwischenwerte. Als weiteres Beispiel umfasst die Bereichsangabe r = 0,001-0,06 die Werte 0,001, 0,002, 0,003, 0,004, 0,005, 0,006, 0,007, 0,008, 0,009, 0,010, 0,011, 0,012, 0,013, 0,014, 0,015, 0,016, 0,017, 0,018, 0,019, 0,020, 0,021, 0,022, 0,023, 0,024, 0,025, 0,026, 0,027, 0,028, 0,029, 0,030, 0,031, 0,032, 0,033, 0,034, 0,035, 0,036, 0,037, 0,038, 0,039, 0,040, 0,041, 0,042, 0,043, 0,044, 0,045, 0,046, 0,047, 0,048, 0,049, 0,050, 0,051, 0,052, 0,053, 0,054, 0,055, 0,056, 0,057, 0,058, 0,059 und 0,06 usw. Die Zusammensetzungen des oder der Photolumineszenzmaterialien werden durch Summenformeln beschrieben. Diese entsprechen jeweils der nominellen Zusammensetzung der Photolumineszenzmaterialien. Tatsächlich können die genauen Atomverhältnisse leicht von den angegebenen Idealwerten abweichen. Ein möglicher Wert für eine derartige Abweichung liegt beispielsweise bei ±10%. Ebenso ist möglich, dass das Photolumineszenzmaterial andere weitere Elemente enthält, die beispielsweise über Verunreinigungen oder Flussmittel in der Ansatzmischung oder während der Synthese eingebracht werden, insbesondere (aber nicht ausschließlich) Bor und/oder Kohlenstoff und/oder Stickstoff und/oder Halogene wie z.B. Fluor oder Chlor oder Brom. Durch eventuelle Abdampfungen einzelner Komponenten während der Synthese kann es auch zu statistischen Unterbesetzungen einzelner Lagen kommen. Aus Gründen der Übersichtlichkeit sind diese eventuellen Effekte in den in angegebenen Summenformeln vereinfachend nicht jedes Mal explizit erwähnt. Beispielsweise kann das Photolumineszenzmaterial einen oder mehrere Leuchtstoffe aus der Gruppe BaMgAl₁₀O₁₇:Eu, Mg₄GeO_{5,5}F:Mn, Sr₆BP₅O₂₀:Eu und Sr₄Al₁₄O₂₅:Eu umfassen bzw. aus einem solchen anorganischen Leuchtstoff besteht. Hierdurch kann das Verbundmaterial ohne eine gelbliche Verfärbung ausgebildet werden, da alle genannten anorganischen Leuchtstoffe nicht oder zumindest nicht nennenswert im für den Menschen sichtbaren Spektralbereich absorbieren, dafür aber nach entsprechender Anregung Licht im für den Menschen sichtbaren Spektralbereich emittieren. Insbesondere absorbieren diese anorganischen Leuchtstoffe im Wesentlichen Licht im tiefblauen, violetten, nahen UV oder UV-Spektralbereich, aber praktisch nicht im blauen, grünen, gelben oder roten Spektralbereich. Umgekehrt emittieren sie aber im blauen, grünen und/oder roten Spektralbereich. Durch die Einbettung eines oder mehrerer dieser anorganischen Leuchtstoffe als Photolumineszenzmaterial in die Matrix des Verbundmaterials, kann dieses nahezu vollständig transparent und im nicht-angeregten Zustand farblos ausgebildet werden. Umgekehrt kann die vom Verbundmaterial im angeregten Zustand emittierte Farbe frei eingestellt werden.

In einer weiteren vorteilhaften Ausgestaltung der Erfindung umfasst die Matrix Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, Keramik und/oder ein nichtmetallisches hybridpolymeres Material. Hierdurch kann das Verbundmaterial ohne Einbußen im Hinblick auf seine Transparenz optimal an seinen jeweiligen Einsatzzweck angepasst werden. Als Gläser kommen dabei beispielsweise niedrig schmelzende Gläser in Frage, die grundsätzlich bleihaltig oder bleifrei ausgebildet sein können. Beispiele für geeignete bleihaltige Gläser sind PbO-B₂O₃, PbO-B₂O₃-ZnO und PbO-B₂O₃-SiO₂, während bleifreie Gläser beispielsweise aus Bi₂O₃-B₂O₃, Bi₂O₃-B₂O₃-ZnO, SnO-P₂O₅ oder ZnO-B₂O₃ ausgewählt sein können. Es ist aber zu betonen, dass grundsätzlich auch andere Gläser sowie Kombinationen daraus als Matrix oder Bestandteil der Matrix vorgesehen sein können. Weiterhin können als Matrix oder Bestandteil der Matrix über Sol-Gel-Prozesse hergestellte nichtmetallische anorganische Materialien wie etwa Wasserglas, Monoaluminiumphosphat (MALP) oder keramische Klebstoffe und/oder nichtmetallische hybridpolymere Materialien auf Basis von Alkylsilikaten wie etwa Tetraethylsilikat (TEOS) verwendet werden. Alternativ oder zusätzlich kommen auch transparente Silikone, organische Kunststoffe und/oder keramische Materialien als MatrixMaterial in Frage. Im Fall von einem oder mehreren keramischen Matrix-Materialien kann das Verbundmaterial, das damit auch als Leuchtstoffkeramik bezeichnet werden kann, hochtransparent und zumindest im Wesentlichen porenfrei hergestellt werden.

Weitere Vorteile ergeben sich, indem die Matrix ein Füllmaterial umfasst, mittels welchem der Brechungsindex der Matrix auf einen vorbestimmten Wert eingestellt ist. Mit anderen Worten ist es vorgesehen, dass der Brechungsindex der Matrix durch Beimischung eines oder mehrerer Füllmaterialien feinjustiert wird, um dem Brechungsindex des Photolumineszenzmaterials zumindest möglichst nahe zu kommen oder exakt zu entsprechen. Das wenigstens eine Füllmaterial kann grundsätzlich frei aus geeigneten Verbindungen gewählt sein, wobei sich anorganische Metalloxide wie etwa ZrO₂, TiO₂ oder Al₂O₃ aufgrund ihrer einfachen Verfügbarkeit und chemischen Beständigkeit als vorteilhaft gezeigt haben. Vorzugsweise wird auch das wenigstens eine Füllmaterial in einer Form verwendet, die die optischen Eigenschaften des Verbundmaterials abgesehen vom Brechungsindex nicht oder zumindest so wenig wie möglich beeinträchtigt. Insbesondere kann auch das wenigstens eine Füllmaterial in Form von Partikeln verwendet werden, deren mittlere Partikeldurchmesser so gewählt sind, dass sie zu möglichst keiner Lichtstreuung des Verbundwerkstoffs führen. Auch in diesem Fall hat es sich daher als vorteilhaft gezeigt, wenn die mittleren Partikeldurchmesser des Füllmaterials wesentlich kleiner und/oder wesentlich größer sind als die Anregungswellenlänge(n) und/oder die Emissionswellenlänge(n) des wenigstens einen Photolumineszenzmaterials. Beispielsweise können die mittleren Partikeldurchmesser des Füllmaterials um mindestens eine Zehnerpotenz kleiner und/oder größer als die maximale bzw. minimale Anregungswellenlänge(n) und/oder Emissionswellenlänge(n) des Photolumineszenzmaterials sein. Beispielsweise kann auch das wenigstens eine Füllmaterial aus Partikeln besteht, die einen mittleren Partikeldurchmesser ≤ 400 nm, insbesondere < 100 nm und vorzugsweise < 5 nm, und/oder einen mittleren Partikeldurchmesser ≥ 800 nm, insbesondere > 10 µm und vorzugsweise > 30 µm, aufweisen. Dabei haben sich insbesondere nanoskalige Füllmaterialien als vorteilhaft gezeigt.

Ein zweiter Aspekt der Erfindung betrifft eine Anzeigeeinrichtung mit wenigstens einem Trägerelement, das wenigstens ein Verbundmaterial gemäß dem ersten Erfindungsaspekt als Schicht oder Bestandteil einer Schicht umfasst. Das Trägerelement kann dabei grundsätzlich aus dem gleichen Material wie die Matrix des Verbundmaterials bestehen. Alternativ oder zusätzlich kann das Trägerelement im Vergleich zur Matrix des Verbundmaterials aus einem oder mehreren anderen Materialien bestehen. Die das Verbundmaterial enthaltende bzw. aus dem Verbundmaterial bestehende Schicht kann grundsätzlich auf einer Seite des Trägerelements oder auf mehreren Seiten des Trägerelements angeordnet sein. Das Trägerelement kann zudem nur bereichsweise oder vollständig beschichtet sein. Vorzugsweise ist das Trägerelement transparent, das heißt, dass hinter dem Trägerelement liegende Gegenstände zumindest relativ klar erkennbar sind, das Trägerelement also für Strahlung des sichtbaren Spektrums zumindest weitgehend durchlässig ist. Alternativ kann das Trägerelement transluzent oder opak bzw. nicht-transparent sein, so dass hinter dem Trägerelement liegende Gegenstände nicht oder zumindest im Wesentlichen nicht erkennbar sind. Die Größe der Anzeigeeinrichtung kann durch Verlängerung der lateralen Größe des Trägerelements nahezu beliebig skaliert werden. Dadurch eignet sich die Anzeigeeinrichtung auch zur großflächigen Beleuchtung sowie zur großflächigen Darstellung von Informationen, wobei zumindest das leuchtfähige Verbundmaterial im ausgeschalteten bzw. nicht-angeregten Zustand transparent oder im Wesentlichen transparent ist. Somit können nahezu beliebige Trägerelemente mit dem im ausgeschalteten bzw. nicht-angeregten Zustand optisch unauffälligen Verbundmaterial als Schicht oder Bestandteil einer Schicht versehen werden und durch Einschalten bzw. Anregen des Photolumineszenzmaterials in der Schicht zum Beleuchten und/oder zum Darstellen von Bilder, Texten und sonstigen Informationen verwendet werden. Die das Verbundmaterial enthaltende Schicht kann dabei sehr dünn sein und beispielsweise eine Dicke von 2 mm, 1,9 mm, 1,8 mm, 1,7 mm, 1,6 mm, 1,5 mm, 1,4 mm, 1,3 mm, 1,2 mm, 1,1 mm, 1,0 mm, 0,9 mm, 0,8 mm, 0,7 mm, 0,6 mm, 0,5 mm, 0,4 mm, 0,3 mm, 0,2 mm, 0,1 mm oder weniger aufweisen. Weiterhin kann grundsätzlich vorgesehen sein, dass das Verbundmaterial als Schicht oder Bestandteil einer Schicht in das Trägerelement eingebettet ist. Weitere Merkmale und deren Vorteile ergeben sich aus den Beschreibungen des ersten Erfindungsaspekts, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass das Trägerelement wenigstens ein Material aus der Gruppe Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, Keramik, Holz, Beton, Stein, Metall und/oder nichtmetallische hybridpolymere Materialien umfasst. Durch die Verwendung eines transparenten Materials kann das Trägerelement transparent oder zumindest transluzent ausgebildet werden. Durch die Verwendung von nicht-transparenten Materialien wie Holz, Beton, Stein, Stahl, Metall und dergleichen können übliche Baustoffe vorteilhaft mit dem leuchtfähigen Verbundmaterial beschichtet und als erfindungsgemäße Anzeigeeinrichtung ausgebildet sein. Hierdurch können beispielsweise Hauswände, Fassaden und Ähnliches auch nachträglich in erfindungsgemäße Anzeigeeinrichtungen umgewandelt werden, die im ausgeschalteten bzw. nicht-angeregten Zustand des Verbundmaterials optisch unauffällig und nicht oder zumindest praktisch nicht von nicht-ausgestatteten Hauswänden unterscheidbar, im eingeschalteten bzw. angeregten Zustand des Verbundmaterials aber zur gegebenenfalls großflächigen Präsentation von Informationen geeignet sind. Durch geeignete Materialwahl kann die Anzeigeeinrichtung zudem besonders variabel ausgebildet sein und beispielsweise als Fenster, Tür, Brüstung bzw. Geländer, Decken- oder Bodenelement, Paneels, Möbel oder Teil eines Möbels, Spiegel, Teil eines Haushaltsgeräts, Display, Head-up-Display etc. dienen.

Weitere Vorteile ergeben sich, indem die Anzeigeeinrichtung mindestens zwei Trägerelemente umfasst. Hierdurch kann die Anzeigeeinrichtung mit unterschiedlichen Schichtabfolgen ausgebildet und optimal an unterschiedliche Anwendungsfälle angepasst werden. Beispielsweise kann die Schicht, die zumindest teilweise aus dem leuchtfähigen Verbundmaterial besteht, zwischen zwei Trägerelementen angeordnet sein, um das Verbundmaterial vor mechanischen Beschädigungen, Umwelteinflüssen etc. zu schützen. Beispielsweise können die Trägerelemente transparente Glas- und/oder Kunststoffscheiben sein, so dass die Anzeigeeinrichtung als transparente Zwei-, Drei- oder Mehrfachverglasung ausgebildet sein kann. Ebenso kann die Anzeigeeinrichtung einen Schichtstapel aus zwei oder mehr Trägerelementen und zwei oder mehr Verbundmaterialenthaltenden Schichten umfassen. Grundsätzlich kann vorgesehen sein, dass ein leuchtfähiges Verbundmaterial und ein benachbartes Trägerelement unmittelbar aneinander anliegen oder voneinander beabstandet sind. Beispielsweise kann ein Luftspalt zwischen einem Verbundmaterial und einem Trägerelement vorgesehen sein. Neben einer Wärmeisolierung kann hierdurch insbesondere auch eine verbesserte Lichtleitung in das Verbundmaterial erzielt werden.

In einer weiteren vorteilhaften Ausgestaltung der Erfindung ist vorgesehen, dass die Anzeigeeinrichtung mindestens zwei Schichten umfasst, die zumindest teilweise aus einem oder mehreren Verbundmaterialien gemäß dem ersten Ausführungsbeispiel bestehen, wobei die mindestens zwei Schichten nebeneinander und/oder übereinander und/oder auf gegenüberliegenden Seiten eines Trägerelements und/oder auf unterschiedlichen Trägerelementen angeordnet sind. Hierdurch kann die Anzeigeeinrichtung optimal an ihren jeweiligen Einsatzzweck angepasst werden. Insbesondere können durch Verwendung unterschiedlicher Verbundmaterialien Bereiche mit unterschiedlichen Emissions- bzw. Anregungswellenlängen bereitgestellt werden, wodurch eine erhöhte Freiheit in Bezug auf die Möglichkeiten der Informationspräsentation gegeben ist. Beispielsweise kann die Anzeigeeinrichtung als eine Art Display ausgebildet sein, das mehrere Farben darstellen kann. Indem die Anzeigeeinrichtung ein rot, ein grün und ein blau emittierendes Verbundmaterial umfasst, kann sie beispielsweise als eine Art RGB-Display ausgebildet sein.

In weiterer Ausgestaltung der Erfindung ist zumindest ein Quencher und/oder Absorber vorgesehen, mittels welchem Licht der Anregungswellenlänge(n) und/oder der Emissionswellenlänge(n) wenigstens eines Photolumineszenzmaterials zu absorbieren ist. Mit Hilfe wenigstens eines Quenchers bzw. Absorbers können bestimmte Bereiche der Anzeigeeinrichtung bzw. des Trägerelements derart ausgestattet werden, dass Licht der Anregungs-und/oder Emissionswellenlänge des jeweiligen Photolumineszenzmaterials zumindest teilweise absorbiert wird. Hierdurch können diese Bereiche der Anzeigeeinrichtung dunkler erscheinen als leuchtfähige Bereiche ohne Quencher/Absorber. Als Quencher eignen sich beispielsweise spezielle Leuchtstoffe, die derart mit einem Aktivator dotiert sind, dass sie Licht bestimmter Wellenlängen stark löschen. Damit sind nur einige Bereiche der Anzeigeeinrichtung in der Lage, Licht zu emittieren, wodurch es möglich ist, den lichtemittierenden Bereich besonders exakt zu definieren, beispielsweise in Form eines Symbols, eines Logos, eines Texts usw. Damit kann vorteilhaft auf einen Projektor als Lichtquelle verzichtet werden. Stattdessen genügen einfache Lichtquellen wie beispielsweise ein verbreiterter Laser oder LEDs, um geometrisch komplexe Informationen präsentieren zu können. Als Absorber können grundsätzlich alle ausreichend lichtabsorbierenden Materialien verwendet werden. Weiterhin kann es vorgesehen sein, dass ein transparentes Trägerelement auf seiner der leuchtfähigen Schicht gegenüber liegenden Seite mit einem Absorber bzw. Quencher versehen ist, um zu verhindern, dass Licht bestimmter Wellenlängen durch das Trägerelement durchtritt. Alternativ oder zusätzlich ist es vorgesehen, dass wenigstens eine Schicht als Antireflexbeschichtung ausgebildet ist. Mit Hilfe einer oder mehrerer Antireflexbeschichtungen können verschiedene Vorteile erzielt werden. Bei der Verwendung von Anregungswellenlängen im tiefblauen, violetten, nahen-UV oder UV-Bereich und insbesondere bei der Verwendung von Laserlicht muss dafür Sorge getragen werden, dass von reflektiertem oder gestreutem Licht keine Gefahr von Augenschäden ausgeht. Mit Hilfe einer Antireflexbeschichtung kann die diesbezügliche Sicherheit der Anzeigeeinrichtung auf besonders einfache Weise gewährleistet werden. Ebenso können potenziell störende Lichtreflexe verhindert werden, wodurch der Betrachtungswinkel der Anzeigeeinrichtung verbessert werden kann. Weiterhin kann mit Hilfe eines Quenchers bzw. Absorbers und/oder mit Hilfe einer Antireflexbeschichtung die Lichtausbreitung in der leuchtfähigen, das erfindungsgemäße Verbundmaterial enthaltenden Schicht gezielt beeinflusst werden. Der Quencher/Absorber kann dazu selbst als Schicht oder Bestandteil einer Schicht verwendet werden und/oder im Trägermaterial angeordnet sein.

In einer weiteren vorteilhaften Ausgestaltung der Erfindung ist vorgesehen, dass die Anzeigeeinrichtung Mittel zum Einkoppeln von Licht in das Photolumineszenzmaterial und/oder wenigstens eine steuerbare und/oder regelbare Beleuchtungseinrichtung umfasst, mittels welcher das Photolumineszenzmaterial anzuregen ist. Dies erlaubt eine besonders hohe Flexibilität bezüglich der gegebenenfalls räumlich unterschiedlichen Anregung des wenigstens einen Photolumineszenzmaterials. Indem die Anzeigeeinrichtung Mittel zum Einkoppeln von Licht in das Photolumineszenzmaterial umfasst, können die Lichtausbreitung besonders gut kontrolliert, eine besonders hohe Lichtausbeute erzielt und störende Lichtreflexe zumindest weitgehend verhindert werden. Die Einkoppelung kann dabei grundsätzlich unmittelbar in die das Verbundmaterial enthaltende, leuchtfähige Schicht und/oder in eine lichtleitende Schicht erfolgen, welche das Licht zur das Verbundmaterial enthaltenden, leuchtfähigen Schicht transportiert. Mit Hilfe einer steuerbaren und/oder regelbaren Beleuchtungseinrichtung können Informationen mit Hilfe der Anzeigeeinrichtung besonders einfach zeitlich und/oder örtlich verändert präsentiert werden.

Weitere Vorteile ergeben sich, indem die Beleuchtungseinrichtung wenigstens einen Projektor und/oder wenigstens einen Laser und/oder wenigstens eine LED umfasst und/oder ausgebildet ist, Licht mit unterschiedlichen Wellenlängen zu emittieren. Dies ermöglicht eine an die jeweilige Ausgestaltung und den jeweiligen Einsatzzweck der Anzeigeeinrichtung angepasste Anregung des wenigstens einen Photolumineszenzmaterials. Ein Projektor, insbesondere ein (Ultra)Kurzstreckenprojektor, kann dabei grundsätzlich sehr nah am Verbundmaterial angeordnet sein, wodurch die Lichtausbreitung und die Richtung des zur Anregung verwendeten Lichts gut kontrolliert und unerwünschte Reflektionen vermieden werden können. Weiterhin kann mit Hilfe eines Projektors besonders einfach eine zeit- und ortsabhängige Lichtbeaufschlagung bzw. Anregung des wenigstens einen Verbundmaterials erfolgen, wodurch Informationen entsprechend variabel präsentiert werden können. Die Beleuchtungseinrichtung kann grundsätzlich einen oder mehrere Filter umfassen, um Licht bestimmter Wellenlänge(n) zu filtern.

Ein dritter Aspekt der Erfindung betrifft ein Verfahren zum Betreiben einer Anzeigeeinrichtung gemäß dem zweiten Erfindungsaspekt, bei welchem das als Schicht oder Bestandteil einer Schicht auf dem Trägerelement angeordnete Verbundmaterial mit elektromagnetischer Strahlung, die wenigstens eine Anregungswellenlänge des als Leuchtmittel in der transparenten Matrix eingebetteten Photolumineszenzmaterials umfasst, beaufschlagt wird. Mit Hilfe des erfindungsgemäßen Verfahrens können Informationen großflächig dargestellt werden, indem das Photolumineszenzmaterial des Verbundmaterials mit Licht beaufschlagt wird, wobei das Licht eine oder mehrere zum Photolumineszenzmaterial passende Anregungswellenlänge(n) enthält. Das Licht kann im einfachsten Fall Sonnenlicht bzw. Umgebungslicht sein, jedoch können auch eine oder mehrere künstliche Lichtquellen zum Anregen des wenigstens einen Photolumineszenzmaterials vorgesehen sein. Im ausgeschalteten bzw. nicht-angeregten Zustand des Photolumineszenzmaterials ist zumindest das erfindungsgemäße Verbundmaterial im Wesentlichen transparent und damit optisch besonders unauffällig. Weitere Merkmale und deren Vorteile ergeben sich aus den Beschreibungen des ersten und des zweiten Erfindungsaspekts, wobei vorteilhafte Ausgestaltungen des ersten und des zweiten Erfindungsaspekts als vorteilhafte Ausgestaltungen des dritten Erfindungsaspekts und umgekehrt anzusehen sind.

Zusätzlich ergeben sich weitere Merkmale der Erfindung aus den Ansprüchen und den Ausführungsbeispielen. Die vorstehend in der Beschreibung genannten Merkmale und Merkmalskombinationen sowie die nachfolgend in den Ausführungsbeispielen genannten und/oder in Alleinstellung gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Dabei zeigen:
- Fig. 1: eine schematische Schnittansicht eines Ausführungsbeispiels eines erfindungsgemäßen Verbundmaterials;
- Fig. 2: eine schematische Schnittansicht eines ersten Ausführungsbeispiels einer erfindungsgemäßen Anzeigeeinrichtung;
- Fig. 3: eine schematische Schnittansicht eines zweiten Ausführungsbeispiels der erfindungsgemäßen Anzeigeeinrichtung;
- Fig. 4: eine schematische Schnittansicht eines dritten Ausführungsbeispiels der erfindungsgemäßen Anzeigeeinrichtung;
- Fig. 5: eine schematische Schnittansicht eines vierten Ausführungsbeispiels der erfindungsgemäßen Anzeigeeinrichtung
- Fig. 6: eine schematische Perspektivansicht eines weiteren Ausführungsbeispiels der erfindungsgemäßen Anzeigeeinrichtung im ausgeschalteten Zustand; und
- Fig. 7: eine schematische Perspektivansicht des in Fig. 6 gezeigten Ausführungsbeispiels der erfindungsgemäßen Anzeigeeinrichtung im eingeschalteten Zustand.

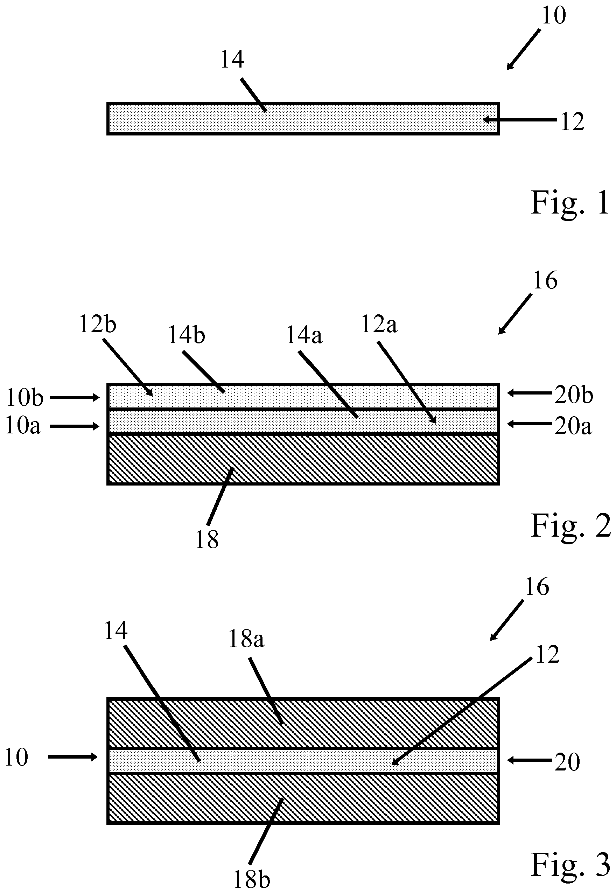

Fig. 1 zeigt eine schematische Schnittansicht eines Ausführungsbeispiels eines erfindungsgemäßen Verbundmaterials 10. Das Verbundmaterial 10 umfasst ein mit Punkten symbolisiertes Photolumineszenzmaterial 12, welches als Leuchtmittel in Form von Partikeln in eine transparente Matrix 14 eingebettet ist. Dabei ist der absolute Betrag der Differenz eines Brechungsindex n_{P} des wenigstens einen Photolumineszenzmaterials 12 und eines Brechungsindex n_{M} der Matrix 14 |n_{P}-n_{M}| = 0,01. Indem das Photolumineszenzmaterial 12 und die Matrix 14 derart aufeinander abgestimmt sind, ist das Verbundmaterial 10 transparent und streut einfallendes Licht nicht oder zumindest im Wesentlichen nicht. Als Photolumineszenzmaterial 12 dient im gezeigten Ausführungsbeispiel ein Leuchtstoff, der im angeregten Zustand im für den Menschen sichtbaren Spektralbereich Licht emittiert, aber im für den Menschen sichtbaren Spektralbereich Licht nicht oder zumindest im Wesentlichen nicht absorbiert, so dass das Verbundmaterial 10 nicht nur transparent, sondern auch farblos ist, solange das Photolumineszenzmaterial 12 nicht angeregt wird. Damit ist das Verbundmaterial 10 im ausgeschalteten bzw. nicht-angeregten Zustand des Photolumineszenzmaterials 12 optisch besonders unauffällig und kann beispielsweise nicht von einer normalen Glasscheibe oder dergleichen unterschieden werden. Umgekehrt erzeugt das Verbundmaterial 10 im eingeschalteten bzw. angeregten Zustand des Photolumineszenzmaterials 12 den Eindruck, dass das vom Photolumineszenzmaterial 12 emittierte Licht direkt von der vermeintlichen "Glasscheibe" emittiert wird. Dies stellt eine technische Lösung dar, die sich fundamental von herkömmlichen Ansätzen wie beispielsweise der Verwendung von Milchglas oder von OLEDs unterscheidet, bei denen die leuchtfähige Oberfläche im ausgeschalteten Zustand eine milchige, nicht-transparente oder gelbliche optische Anmutung besitzt.

Es ist aber zu betonen, dass grundsätzlich natürlich auch nicht-weiße Photolumineszenzmaterialien 12 vorgesehen sein können, falls ein farbiger Eindruck im nicht-angeregten ("Aus") Zustand gewünscht ist oder toleriert wird. Viele Photolumineszenzmaterialien 12 können beispielsweise durch blaues Licht (z. B. LED oder Laser) angeregt werden und besitzen daher im "Aus"-Zustand ein nicht-weißes bzw. farbiges Aussehen. Zum Beispiel besitzt ein YAG:Ce Leuchtstoff im "Aus"-Zustand eine grünliche oder gelbliche Farbe, da er blaues Licht absorbiert und grünes oder gelbes Licht emittiert. Der Brechungsindex n_{P} von YAG:Ce beträgt etwa 1.83. Wenn ein solcher Leuchtstoff in ein Glas, eine Siliconmatrix oder dergleichen mit einem Brechungsindex n_{M} von beispielsweise 1.5 eingebettet wird, ist das allgemeine Erscheinungsbild eines solchen nicht-erfindungsgemäßen Verbundmaterials im "Aus"-Zustand aufgrund der großen Differenz der Brechungsindizes n_{P}, n_{M} und der damit verbundenen starken Lichtstreuung milchig oder opak, das heißt nur sehr eingeschränkt transparent oder sogar vollständig undurchsichtig.

Daher wird im Rahmen der Erfindung die Matrix 14 so gewählt, dass sie einerseits transparent ist und dass andererseits der Betrag der Differenz |n_{P}-n_{M}| ≤ 0,2 ist, das heißt dass der Brechungsindex n_{M} der Matrix 14 möglichst nahe am Brechungsindex n_{P} des Leuchtstoffs bzw. des Photolumineszenzmaterials 12 liegt. Dadurch wird das Photolumineszenzmaterial 12 in Bezug auf die Lichtstreuung nahezu "unsichtbar", da die Leuchtstoffpartikel das durch das Verbundmaterial 10 tretende Licht nicht oder praktisch nicht streuen. Daher bleibt die Transparenz der Matrix 14 erhalten, so dass das gesamte Verbundmaterial 10 transparent ist. Bei einer Einbettung eines Photolumineszenzmaterials 12 in eine Matrix 14 mit zumindest annähernd gleichem Brechungsindex (n_{P} ≈ n_{M}) spielt die Partikelgröße und -größenverteilung des Photolumineszenzmaterials 12 üblicherweise nur eine untergeordnete Rolle.

Um ein gelbliches oder anderweitig farbiges Aussehen des Verbundmaterials 10 zu vermeiden, hat es sich als vorteilhaft gezeigt, Leuchtstoffe bzw. Photolumineszenzmaterialien 12 zu verwenden, die sichtbares Licht nicht oder kaum absorbieren. Beispielsweise können Leuchtstoffe verwendet werden, die hauptsächlich Strahlung im tiefen Blau oder Violett, im nahen UV oder im UV-Bereich absorbieren, aber nicht oder kaum im blauen, grünen, gelben und roten Bereich des sichtbaren Spektrums. Einige Beispiele für solche Photolumineszenzmaterialien 12 sind BaMgAl₁₀O₁₇:Eu, Mg₄GeO₅,₅F:Mn, Sr₆BP₅O₂₀:Eu und Sr₄Al₁₄O₂₅:Eu. Durch das Einbetten eines oder mehrerer dieser Photolumineszenzmaterialien 12 in eine Matrix 14 mit zumindest annähernd gleichem Brechungsindex n_{M} wird das Verbundmaterial 10 zumindest nahezu vollständig transparent und farblos. Zum Einschalten bzw. Aktivieren kann das Photolumineszenzmaterial 12 im Verbundmaterial 10 durch eine zu den jeweiligen Absorptionswellenlängen passende Lichtquelle zur Photolumineszenz im sichtbaren Spektralbereich bestrahlt werden. Je nach Leuchtstoff bzw. Leuchtstoffmischung liegt die resultierende Lichtemission in unterschiedlichen Wellenlängenbereichen des sichtbaren Spektralbereichs und kann durch das menschliche Auge wahrgenommen werden.

In einer Ausführungsform emittiert das Photolumineszenzmaterial 12 im angeregten Zustand eine Primärstrahlung im roten Bereich des elektromagnetischen Spektrums und besteht aus einem Leuchtstoff der Formel (M₁-ₓEuₓ)₁₀(PO₄)₆(Cl,F)₂, wobei M = Sr oder M = Sr und ein oder mehrere Elemente bedeutet, die aus einer Gruppe ausgewählt sind, die Mg, Ca und Ba umfasst. Bevorzugt ist x = 0,02-0,08, besonders bevorzugt ist x = 0,03-0,06. Bevorzugt enthält M mindestens 50 mol% Sr, besonders bevorzugt mindestens 70 mol% Sr, ganz besonders bevorzugt mindestens 80 mol% Sr, jeweils bezogen auf die Summe aus Mg, Ca, Sr und Ba.

Weiter kann das Photolumineszenzmaterial 12 ein Leuchtstoff der Formel M₁₋ₚEuₚ(Mg_{1-z}Mn_{z})Al₁₀O₁₇ sein, wobei M = Ba oder M = Ba und ein oder mehrere Elemente bedeutet, die aus einer Gruppe ausgewählt sind, die Mg, Ca und Sr umfasst. Bevorzugt ist p = 0,05-0,6 und z = 0,1-0,4, besonders bevorzugt ist p = 0,1-0,5 und z = 0,15-0,35. Bevorzugt enthält M mindestens 50 mol% Ba, besonders bevorzugt mindestens 70 mol% Ba, ganz besonders bevorzugt mindestens 80 mol% Ba, jeweils bezogen auf die Summe aus Mg, Ca, Sr und Ba.

In einer weiteren Ausführungsform emittiert das Photolumineszenzmaterial 12 im angeregten Zustand eine Primärstrahlung im roten Bereich des elektromagnetischen Spektrums und besteht aus einem Leuchtstoff der Formel M_{1-y}Eu_{y}MgAl₁₀O₁₇, wobei M = Ba oder M = Ba und ein oder mehrere Elemente bedeutet, die aus einer Gruppe ausgewählt sind, die Mg, Ca und Sr umfasst. Bevorzugt ist y = 0,1-0,6, besonders bevorzugt ist y = 0,3-0,6. Bevorzugt enthält M mindestens 50 mol% Ba, besonders bevorzugt mindestens 70 mol% Ba, ganz besonders bevorzugt mindestens 80 mol% Ba, jeweils bezogen auf die Summe aus Mg, Ca, Sr und Ba.

In einer weiteren Ausführungsform ist das Photolumineszenzmaterial 12 ein Leuchtstoff der Formel M₁₋ₚEuₚ(Mg_{1-z}Mn_{z})Al₁₀O₁₇, wobei M = Ba oder M = Ba und ein oder mehrere Elemente bedeutet, die aus einer Gruppe ausgewählt sind, die Mg, Ca und Sr umfasst. Bevorzugt sind p = 0,05-0,6 und z = 0,1-0,4, besonders bevorzugt sind p = 0,1-0,5 und z = 0,15-0,35. Bevorzugt enthält M mindestens 50 mol% Ba, besonders bevorzugt mindestens 70 mol% Ba, ganz besonders bevorzugt mindestens 80 mol% Ba, jeweils bezogen auf die Summe aus Mg, Ca, Sr und Ba.

Neben anorganischen Leuchtstoffen können auch andere lumineszierenden Materialien als Photolumineszenzmaterial 12 verwendet werden, sofern sie keine zu starke Lichtstreuung im Verbundmaterial 10 bewirken. Beispiele für alternative Photolumineszenzmaterialien 12 sind organische Farbstoffe oder Quantenpunkte, insbesondere Quantenpunkte mit einer speziellen Kern-Schale-Struktur, die den Stokes-Shift zwischen Absorption und Emission erhöht.

In der Regel erzeugt ein angeregtes Photolumineszenzmaterial 12 hauptsächlich eine Farbe, das heißt vor allem blau, grün, gelb oder rot. Das oder die Photolumineszenzmaterialien 12 können daher so gewählt sein, dass das Verbundmaterial 10 durch Bestrahlung mit Licht geeigneter Anregungswellenlänge Licht mit einer bestimmten spektralen Emission, z. B. blau, grün, gelb, orange oder rot emittiert. Durch geeignete Wahl der Photolumineszenzmaterialien 12 kann der Farbort des emittierten Lichts optimal an den jeweiligen Anwendungszweck eingestellt werden.

Um weißes Licht zu erzeugen, kann eine Mischung von zwei oder mehr Photolumineszenzmaterialien 12 verwendet werden, z. B. ein blauer und ein gelber Leuchtstoff oder ein blauer, ein grüner und ein roter Leuchtstoff. Es ist auch möglich, mehrere Photolumineszenzmaterialien 12 in einer Weise zu kombinieren, dass eine Weißlichtemission mit einem Farbpunkt bei oder nahe an 2700 K, 3000 K, 4000 K, 5000 K, 6500 K, usw. erhalten wird. Entsprechend kann der Farbwiedergabeindex (Colour Rendering Index, CRI) in Abhängigkeit der verwendeten Photolumineszenzmaterialien 12 eingestellt werden.

In Abhängigkeit der Brechungsindizes n_{P} der Photolumineszenzmaterialien 12, kann es notwendig sein, eine individuelle Matrix 14 für jedes Photolumineszenzmaterial 12 zu verwenden. Bei gleichen oder zumindest annähernd gleichen Brechungsindizes n_{P} (± 0,2 oder weniger) der Photolumineszenzmaterialien 12 können auch zwei oder mehr Photolumineszenzmaterialien 12 in derselben Matrix 14 eingebettet sein.

Gängige Photolumineszenzmaterialien 12 besitzen üblicherweise eine mittlere Korn- bzw. Partikelgröße im Bereich von etwa 0,5 µm bis 30 µm. Somit streuen sie in der Regel Licht im für den Menschen sichtbaren Wellenlängenbereich. Durch Verwendung von Photolumineszenzmaterialien 12, die aus Partikeln besteht, deren mittlerer Partikeldurchmesser deutlich unter oder über ihrer Anregungswellenlänge liegt, kann die Lichtstreuung erheblich verringert werden. Beispielsweise können Photolumineszenzmaterialien 12 verwendet werden, deren mittlerer Partikeldurchmesser ≤ 400 nm, insbesondere < 100 nm und vorzugsweise < 5 nm, und/oder ≥ 800 nm, insbesondere > 2 µm, insbesondere > 10 µm und vorzugsweise > 30 µm beträgt.

Die Matrix 14 kann grundsätzlich jedes geeignete transparente Material umfassen bzw. aus einem solchen Material bestehen. Beispiele für geeignete Materialien sind Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, und/oder nichtmetallische hybridpolymere Materialien. Es ist auch möglich, ein keramisches Material als Matrix 14 zu verwenden, um eine Art Leuchtstoffkeramik zu erhalten, die grundsätzlich hochtransparent und zumindest weitgehend porenfrei hergestellt werden kann. Dabei kann es weiterhin vorgesehen sein, dass der Brechungsindex n_{M} der Matrix 14 durch Zugabe eines oder mehrerer Füllmaterialien (nicht gezeigt) feinjustiert und dem Brechungsindex n_{P} des Photolumineszenzmaterialien 12 so weit wie möglich angenähert wird. Beispiele für geeignete Füllmaterialien sind Metalloxide wie ZrO₂, TiO₂, Al₂O₃ oder andere geeignete Materialien, die gegebenenfalls nanoskalig sein können, um Lichtstreuung oder sonstige optische Beeinträchtigungen des Verbundmaterials 10 zu vermeiden.

Fig. 2 zeigt eine schematische Schnittansicht eines ersten Ausführungsbeispiels einer erfindungsgemäßen Anzeigeeinrichtung 16. Die Anzeigeeinrichtung 16 umfasst ein Trägerelement 18, auf dem zwei Schichten 20a, 20b angeordnet sind, wobei die Schichten 20a, 20b jeweils aus unterschiedlichen Verbundmaterialien 10a, 10b bestehen. Die Verbundmaterialien 10a, 10b umfassen unterschiedliche Photolumineszenzmaterialien 12a, 12b, die in unterschiedlichen Matrizes 14a, 14b eingebettet sind, um den unterschiedlichen Brechungsindizes n_{Pa} und n_{Pb} Rechnung zu tragen und um sicherzustellen, dass die jeweiligen Differenzen zu den Brechungsindizes n_{Ma} bzw. n_{Mb} der Matrizes 14a, 14b höchstens ±0,2 und vorzugsweise höchstens ±0,01 betragen. Grundsätzlich kann jedoch auch nur eine Schicht 20 vorgesehen sein. Das Trägerelement 18 kann aus einem transparenten oder aus einem nicht-transparenten Material bestehen. Beispielsweise kann das Trägerelement 18 ein Material aus der Gruppe Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, Keramik, Holz, Beton, Stein, Metall und/oder nichtmetallische hybridpolymere Materialien umfassen.

Alternativ zum gezeigten Ausführungsbeispiel können auch weitere Schichten vorgesehen sein, die zumindest teilweise aus dem erfindungsgemäßen Verbundmaterial 10 bestehen. Ebenso kann vorgesehen sein, dass zwei oder mehr Schichten 20a, 20b etc. auf unterschiedlichen Seiten des Trägerelements 18 angeordnet sind. Abhängig von der Anordnung der Schichten 20a, 20b und der Wahl des Trägerelements 18 ist es also möglich, dass das emittierte Licht auf beiden Seiten der Anzeigeeinrichtung 16 einen ähnlichen Farbpunkt besitzt. Dies ist insbesondere dann möglich, wenn alle Photolumineszenzmaterialien 12 in einer einzelnen Schicht 20 eingebettet sind. Ebenso ist es abhängig von der Anordnung der Schichten 20a, 20b und der Wahl des Trägerelements 18 möglich, Licht mit verschiedenen Farbpunkten von beiden Seiten des Trägerelements 18 aus zu emittieren. Weiterhin kann es auch vorgesehen sein, dass wenigstens eine der Schichten 20a, 20b in das Trägerelement 18 eingebettet ist.

Die Schichtdicke jeder lichtemittierenden Schicht 20a, 20b bzw. jedes Verbundmaterials 10a, 10b kann sehr klein sein und zum Beispiel in der Größenordnung von 1 mm oder weniger liegen. Somit besitzt die Lichtemissionsfläche eine im Wesentlichen zweidimensionale Form. Die Schichtdicke kann abhängig von verschiedenen Parametern wie beispielsweise Konzentration des Photolumineszenzmaterials 12 in der Matrix 14 und dem Absorptionsquerschnitt des Verbundmaterials 10 gewählt werden.

Neben Fassaden kann die Anzeigeeinrichtung 16 daher auch zur Ausstattung bzw. als Ersatz von Türen, Spiegeln, Fenstern usw. verwendet werden. Es ist auch möglich, eine solche Anzeigeeinrichtung 16 in Form einer Glasdecke, als Glasboden oder als Display, insbesondere als Head-Up-Display auszubilden bzw. zu verwenden. Ebenso kann die Anzeigeeinrichtung 16 auch für Allgemeinbeleuchtung verwendet werden, beispielsweise in Form eines Fensters oder einer Lampe, die im "Aus"-Zustand zumindest im Wesentlichen transparent ist, im angeregten bzw. eingeschalteten ("Ein") Zustand aber Licht emittiert.

Weiterhin kann es alternativ vorgesehen sein, dass die obere Schicht 20b als Antireflexbeschichtung ausgebildet ist. In der Regel sollten bei Verwendung von tiefblauem oder violettem Anregungslicht sowie bei der Verwendung von nah-UV oder UV-Licht, insbesondere von Laserlicht, Vorkehrungen getroffen werden, um Augenschäden für Betrachter auszuschließen. Um die Sicherheit der Anzeigeeinrichtung 16 zu verbessern, kann man die Strahlrichtung optimieren, um Reflexionen zu vermeiden. Dies ist beispielsweise durch eine Antireflexbeschichtung möglich. Alternativ oder zusätzlich kann die der Schicht 20a gegenüber liegende Seite des Trägerelements 18 mit einer Antireflexbeschichtung und/oder einem Absorber beschichtet sein, um sicherzustellen, dass kein Licht mit unerwünschten Wellenlängen und/oder unerwünschter Ausbreitungsrichtung durch die Anzeigeeinrichtung 16 passieren kann.

Fig. 3 zeigt eine schematische Schnittansicht eines zweiten Ausführungsbeispiels der erfindungsgemäßen Anzeigeeinrichtung 16. Im Unterschied zum vorhergehenden Ausführungsbeispiel umfasst die Anzeigeeinrichtung 16 zwei Trägerelemente 18a, 18b, zwischen denen eine Schicht 20 angeordnet ist, die aus einem erfindungsgemäßen Verbundmaterial 10 besteht. Durch den gezeigten Schichtaufbau ist das Verbundmaterial 10 besonders gut gegen Umwelteinflüsse geschützt. Zudem kann die Anzeigeeinrichtung 16 beispielsweise als Ersatz für eine Doppelverglasung verwendet werden. Vorzugsweise besteht daher wenigstens eines der Trägerelemente 18a, 18b aus einem transparenten Material wie beispielsweise Glas, Keramik, Silikon oder Acrylglas, um einen Durchtritt der Anregungs-und Emissionsstrahlung zu ermöglichen. Alternativ kann vorgesehen sein, dass die Anregungsstrahlung durch einen Lichtleiter (nicht gezeigt) in das Verbundmaterial 10 eingekoppelt wird.

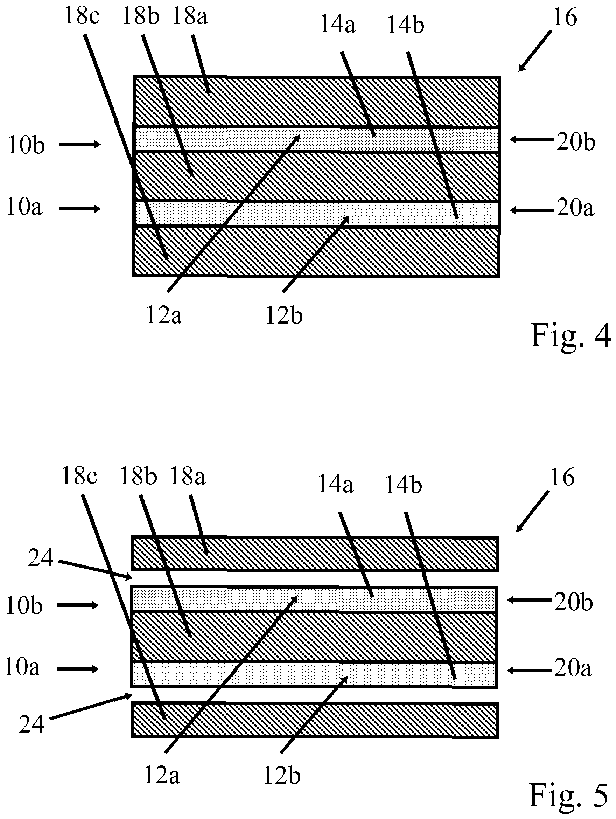

Fig. 4 zeigt eine schematische Schnittansicht eines dritten Ausführungsbeispiels der erfindungsgemäßen Anzeigeeinrichtung 16, die im Unterschied zum vorherigen Beispiel als Ersatz für eine Dreifachverglasung ausgebildet ist. Hierzu umfasst die Anzeigeeinrichtung 16 drei Trägerelemente 18a-c, zwischen denen zwei Schichten 20a, 20b aus jeweiligen Verbundmaterialien 10a, 10b angeordnet sind.

Fig. 5 zeigt eine schematische Schnittansicht eines vierten Ausführungsbeispiels der erfindungsgemäßen Anzeigeeinrichtung 16. Der Aufbau der Anzeigeeinrichtung 16 entspricht dabei im Wesentlichen dem in Fig. 4 gezeigten Aufbau. Im Unterschied zum vorhergehenden Ausführungsbeispiel sind jedoch zwischen den Verbundmaterialien 10a, 10b und den äußeren Trägerelementen 18a, 18c jeweilige Spalte 24 ausgebildet. Die Spalte 24 können grundsätzlich mit Luft, einem Gas, einem vorbestimmten Gasgemisch oder einem anderweitigen geeigneten Material gefüllt sein. Ebenso kann vorgesehen sein, dass wenigstens einer der Spalte 24 evakuiert ist. Hierdurch ist eine besonders vorteilhafte Lichteinkopplung mit hoher Quantenausbeute in das mittlere, die Verbundmaterialien 10a, 10b tragende Trägerelement 18b ermöglicht, da eingekoppeltes Licht mit geeigneten Anregungswellenlängen nur durch das Trägerelement 18b geleitet wird. Darüber hinaus ist die Anzeigeeinrichtung 16 im Hinblick auf ihre optischen und mechanischen Eigenschaften besonders unempfindlich gegenüber Verschmutzungen und Druckbeaufschlagungen der äußeren Trägerelemente 18a, 18c, beispielsweise durch Finger eines Betrachters.

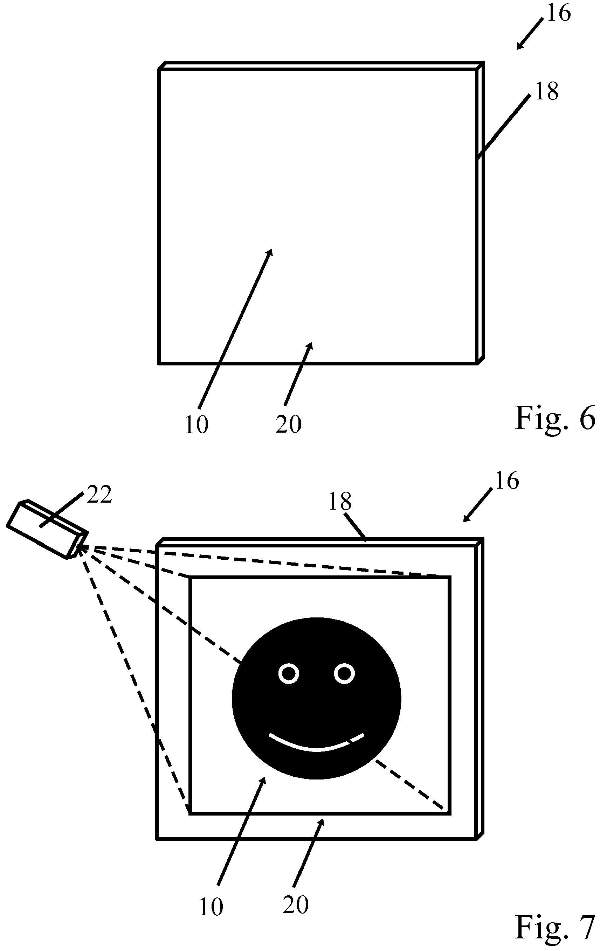

Fig. 6 zeigt eine schematische Perspektivansicht eines weiteren Ausführungsbeispiels der erfindungsgemäßen Anzeigeeinrichtung 16 im ausgeschalteten bzw. nicht-angeregten Zustand ("Aus"-Zustand). Die Anzeigeeinrichtung 16 umfasst ein transparentes Trägerelement 18, auf welchem eine Schicht 20 angeordnet ist, die teilweise aus dem erfindungsgemäßen Verbundmaterial 10 besteht. Aus Fig. 5 wird deutlich, dass die Fähigkeit der Anzeigeeinrichtung 16 zur Darstellung von Informationen im "Aus"-Zustand aufgrund der Transparenz, Farblosigkeit und geringen Schichtdicke der Schicht 20 nicht erkennbar ist.

Fig. 7 zeigt eine schematische Perspektivansicht des in Fig. 6 gezeigten Ausführungsbeispiels der erfindungsgemäßen Anzeigeeinrichtung 16 im eingeschalteten Zustand. Man erkennt, dass die gesamte Schicht 20 durch eine Beleuchtungseinrichtung 22 der Anzeigeeinrichtung 16 mit Anregungsstrahlung beaufschlagt wird, so dass der mit dem Verbundmaterial 10 versehene Bereich der Schicht 20 photoluminesziert und Licht anderer Wellenlänge emittiert. Die Anzeigeeinrichtung 16 kann daher mit Hilfe einer geeigneten Beleuchtungseinrichtung 22 zum Anregen des oder der Photolumineszenzmaterialien 12 als eine Art Display fungieren. Die Größe des Displays kann dabei durch Veränderung der lateralen Größe des Trägerelements 18 bzw. des Verbundmaterials 10 und der Größe der beleuchteten Fläche praktisch frei skaliert werden. Grundsätzlich können natürlich auch mehrere Beleuchtungseinrichtungen 22 vorgesehen sein, um unterschiedliche Photolumineszenzmaterialien 12 anzuregen und/oder um besonders großflächige Schichten 20 mit Anregungsstrahlung zu beaufschlagen. Dabei ist vorzugsweise vorgesehen, dass die Beleuchtungseinrichtung 22 Anregungslicht erzeugt, das für das menschliche Auge nicht oder kaum sichtbar ist, so dass das Anregungslicht und sein Ursprung für einen Betrachter nicht erkennbar sind.

Durch die Verwendung eines Projektors als Beleuchtungseinrichtung 22, das heißt einer Lichtquelle, die Bereiche der Schicht 20 spezifisch und variabel beleuchten kann, ist es möglich, beliebige Logos, Texte, Animationen usw. anzuzeigen, so dass die Anzeigeeinrichtung 16 ähnlich wie ein Display verwendet werden kann. Die Leuchtdichte der Lichtemission kann durch Verwendung einer stärkeren Lichtbeaufschlagung bzw. durch die Verwendung von mehreren Beleuchtungseinrichtungen 22 erhöht werden.

Darüber hinaus kann die Beleuchtungseinrichtung 22 durch Verwendung von (Ultra)Kurzdistanzprojektoren als steuerbare bzw. regelbare Lichtquelle sehr nahe an der Schicht 20 angeordnet werden, was in Bezug auf die Steuerung der Ausbreitungsrichtung des Anregungslichtes und damit die Vermeidung von unerwünschten Reflexionen vorteilhaft ist. Es ist auch möglich, einige Bereiche der Schicht 20 und/oder des Trägerelements 18 mit einem Quencher und/oder Absorber zu versehen, der Licht hauptsächlich absorbiert und keine Photolumineszenzeigenschaften besitzt. In diesem Fall können Bereiche erzeugt werden, die im Vergleich zu den Bereichen mit eingebettetem bzw. für Licht zugänglichem Photolumineszenzmaterial 12 dunkel erscheinen. Ein solcher Quencher und/oder Absorber kann ein Leuchtstoff sein, der mit einem Aktivator in einer Weise dotiert ist, dass er Emissionsstrahlung stark löscht. Auf diese Weise sind nur spezielle Bereiche der Anzeigeeinrichtung 16 bzw. der Schicht 20 in der Lage, Licht zu emittieren, so dass die lichtemittierenden Bereiche besonders präzise definiert werden können, beispielsweise in der Form eines Symbols, eines Logos, eines Textes etc. In diesem Fall wird zudem kein Projektor als Lichtquelle benötigt, sondern es können einfachere Beleuchtungseinrichtungen 22 wie etwa ein erweiterter Laser und/oder LEDs verwendet werden. Anstelle eines solchen Quenchers und/oder Absorbers ist es auch möglich, andere absorbierende Materialien zu verwenden. Auch ist es möglich, Bereiche des Trägerelements 18 nicht mit einer leuchtfähigen Schicht 20 zu versehen, damit sie kein Licht emittieren können.

Im Allgemeinen ist es möglich, unterschiedliche Arten von Beleuchtungseinrichtungen 22 zur Anregung zu verwenden. Beispiele sind Laser, LEDs und herkömmliche Lichtquellen, die gegebenenfalls mit einem Filter versehen sein können, um gewisse Wellenlängenbereiche zu blockieren. Neben der Bestrahlung mit Licht ist es möglich, Licht in die Schicht 20 oder in eine benachbarte Lichtleiterschicht (nicht gezeigt) einzukoppeln. Zum Beispiel kann Licht einer Lichtquelle von den Rändern des Trägerelements 18 in einen Lichtleiter gekoppelt werden. Alternativ kann das Trägerelement 18 gegebenenfalls selbst als Lichtleiter verwendet werden. Wenn das Licht von den Rändern der Schicht 20 eingekoppelt wird und die Lichtintensität am Rand besonders hoch ist, kann es von Vorteil sein, eine nicht-gleichförmige Schicht 20 auf dem Trägerelement 18 auszubilden, um die Gesamtlichtemission über die leuchtfähige Fläche zu vereinheitlichen. Die Schicht 20 kann hierzu beispielsweise eine ungleichförmige Dicke aufweisen. Alternativ oder zusätzlich kann die Konzentration des Photolumineszenzmaterials 12 und/oder eines Quenchers/Absorbers ungleichmäßig sein, beispielsweise im Randbereich geringer und in Abhängigkeit des Abstands vom Randbereich entsprechend höher oder umgekehrt. Es ist auch möglich, bestimmte Ausbreitungsrichtungen des Anregungslichts und/oder des reflektierten bzw. gestreuten Lichts zu blockieren, indem man ein entsprechendes Material wie Glas, Kunststoff usw. verwendet, das das Licht gezielt absorbiert.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verbundmaterial (10), umfassend wenigstens ein Photolumineszenzmaterial (12), welches als Leuchtmittel in eine transparente Matrix (14) eingebettet ist, wobei ein Brechungsindex (n_{P}) des wenigstens einen Photolumineszenzmaterials (12) und ein Brechungsindex (n_{M}) der Matrix (14) eine Differenz von höchstens ±0,2 aufweisen, und wobei das Verbundmaterial (10) im sichtbaren Spektralbereich transparent und farblos ausgebildet ist.

2. Verbundmaterial (10) nach Anspruch 1,
**dadurch gekennzeichnet, dass**
ein Absorptionsmaximum des Photolumineszenzmaterials (12) außerhalb des für Menschen sichtbaren Spektralbereichs liegt.

3. Verbundmaterial (10) nach Anspruch 1 oder 2,
**dadurch gekennzeichnet, dass**
das Photolumineszenzmaterial (12) aus Partikeln besteht, die einen mittleren Partikeldurchmesser ≤ 400 nm, insbesondere < 100 nm und vorzugsweise < 5 nm, und/oder einen mittleren Partikeldurchmesser ≥ 800 nm, insbesondere > 10 µm und vorzugsweise > 30 µm, aufweisen.

4. Verbundmaterial (10) nach einem der Ansprüche 1 bis 3,
**dadurch gekennzeichnet, dass**
das wenigstens eine Photolumineszenzmaterial (12) ausgewählt ist aus einer Gruppe, die anorganische Leuchtstoffe, organische Leuchtstoffe und Quantenpunkte umfasst.

5. Verbundmaterial (10) nach Anspruch 4,
**dadurch gekennzeichnet, dass**
das Photolumineszenzmaterial (12) wenigstens einen anorganischen Leuchtstoff aus der Gruppe
- (M₁₋ₓEuₓ)₁₀(PO₄)₆(Cl,F)₂, in dem M aus einem oder mehreren Elementen aus der Gruppe Sr, Mg, Ca und Ba gewählt und x = 0,01-0,12 ist;
- M_{1-y}Eu_{y}MgAl₁₀O₁₇, in dem M aus einem oder mehreren Elementen aus der Gruppe Ba, Mg, Ca und Sr gewählt und y = 0,01 - 0,9 ist;
- M_{1-z}Eu_{z}MgAl₁₀O₁₇, in dem M aus einem oder mehreren Elementen aus der Gruppe Ba, Mg, Ca und Sr gewählt und z = 0,01 - 0,9 ist;
- (M₁₋ₚEuₚ)₆BP₅O₂₀, in dem M aus einem oder mehreren Elementen aus der Gruppe Sr, Mg, Ca und Ba gewählt und p = 0,01 - 0,9 ist;
- (Sr_{1-q}Eu_{q})₄Al₁₄O₂₅, in dem q = 0,01 - 0,9 ist;
- Mg₄Ge₁₋ᵣMnᵣ(O,F)₆, in dem r = 0,001-0,06 ist; oder
- M₁₋ₛEuₛ(Mg₁₋ₜMnₜ)Al₁₀O₁₇, in dem M aus einem oder mehreren Elementen aus der Gruppe Ba, Mg, Ca und Sr gewählt, s = 0,01-0,7 und t = 0,05-0,5 ist,
umfasst.

6. Verbundmaterial (10) nach einem der Ansprüche 1 bis 5, **dadurch gekennzeichnet, dass**
die Matrix (14) Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, Keramik und/oder ein nichtmetallisches hybridpolymeres Material umfasst.

7. Verbundmaterial (10) nach einem der Ansprüche 1 bis 6, **dadurch gekennzeichnet, dass**
die Matrix (14) ein Füllmaterial umfasst, mittels welchem der Brechungsindex (n_{M}) der Matrix (14) auf einen vorbestimmten Wert eingestellt ist.

8. Anzeigeeinrichtung (16) mit wenigstens einem Trägerelement (18), das wenigstens ein Verbundmaterial (10) nach einem der Ansprüche 1 bis 7 als Schicht (20) oder Bestandteil einer Schicht (20) umfasst.

9. Anzeigeeinrichtung (16) nach Anspruch 8,
**dadurch gekennzeichnet, dass**
das Trägerelement (18) wenigstens ein Material aus der Gruppe Glas, Silikon, Kunststoff, insbesondere Polyacrylat, Polymethacrylat, Polymethylmethacrylat, Polycarbonat, Epoxidharz, Formaldehydharz, Polyacrylnitril, Polyamide, Polybutadien, Polyester, Polyethen, Polyharnstoff, Polypropen, Polystyrol, Polyurethan, Polyvinylchlorid und/oder Polytetrafluorethen, Keramik, Holz, Beton, Stein, Metall und/oder nichtmetallische hybridpolymere Materialien umfasst.

10. Anzeigeeinrichtung (16) nach Anspruch 8 oder 9,
**dadurch gekennzeichnet, dass**
diese mindestens zwei Trägerelemente (18a, 18b) umfasst.

11. Anzeigeeinrichtung (16) nach einem der Ansprüche 8 bis 10,
**dadurch gekennzeichnet, dass**
diese mindestens zwei Schichten (20a, 20b) umfasst, die zumindest teilweise aus einem oder mehreren Verbundmaterialien (10) nach einem der Ansprüche 1 bis 7 bestehen, wobei die mindestens zwei Schichten (20a, 20b) nebeneinander und/oder übereinander und/oder auf gegenüberliegenden Seiten eines Trägerelements (18) und/oder auf unterschiedlichen Trägerelementen (18a, 18b) angeordnet sind.

12. Anzeigeeinrichtung (16) nach einem der Ansprüche 8 bis 11,
**dadurch gekennzeichnet, dass**
zumindest ein Quencher und/oder Absorber vorgesehen ist, mittels welchem Licht der Anregungswellenlänge(n) und/oder der Emissionswellenlänge(n) wenigstens eines Photolumineszenzmaterials (12) zu absorbieren ist, und/oder dass wenigstens eine Schicht (20) als Antireflexbeschichtung ausgebildet ist.

13. Anzeigeeinrichtung (16) nach einem der Ansprüche 8 bis 12,
**dadurch gekennzeichnet, dass**
diese Mittel zum Einkoppeln von Licht in das Photolumineszenzmaterial (12) und/oder wenigstens eine steuerbare und/oder regelbare Beleuchtungseinrichtung (22) umfasst, mittels welcher das Photolumineszenzmaterial (12) anzuregen ist.

14. Anzeigeeinrichtung (16) nach Anspruch 13,
**dadurch gekennzeichnet, dass**
die Beleuchtungseinrichtung (22) wenigstens einen Projektor und/oder wenigstens einen Laser und/oder wenigstens eine LED umfasst und/oder ausgebildet ist, Licht mit unterschiedlichen Wellenlängen zu emittieren.

15. Verfahren zum Betreiben einer Anzeigeeinrichtung (16) nach einem der Ansprüche 8 bis 14, bei welchem das als Schicht (20) oder Bestandteil einer Schicht (20) auf dem Trägerelement (18) angeordnete Verbundmaterial (10) mit elektromagnetischer Strahlung, die wenigstens eine Anregungswellenlänge des als Leuchtmittel in der transparenten Matrix (14) eingebetteten Photolumineszenzmaterials (12) umfasst, beaufschlagt wird.

## Claims

1. Composite material (10), comprising at least one photoluminescent material (12) which is embedded as a light source in a transparent matrix (14), wherein a refractive index (n_{P}) of the at least one photoluminescent material (12) and a refractive index (n_{M}) of the matrix (14) differ by at most ±0.2, and wherein the composite material (10) is configured to be transparent and colorless in the visible region of the spectrum.

2. Composite material (10) according to claim 1,
**characterized in that**
an absorption maximum of the photoluminescent material (12) lies outside the region of the spectrum visible to the human eye.

3. Composite material (10) according to claim 1 or 2,
**characterized in that**
the photoluminescent material (12) consists of particles,
which have an average particle diameter of ≤ 400 nm, in particular of < 100 nm and preferably < 5 nm, and/or an average particle diameter of ≥ 800 nm, in particular of > 10 µm and preferably > 30 µm.

4. Composite material (10) according to one of claims 1 to 3,
**characterized in that**
the at least one photoluminescent material (12) is selected from a group comprising inorganic phosphors, organic phosphors and quantum dots.

5. Composite material (10) according to claim 4,
**characterized in that**
the photoluminescent material (12) comprises at least one inorganic phosphor from the group
- (M₁₋ₓEuₓ) ₁₀(PO₄)₆(Cl, F)₂, in which M is selected from one or more elements from the group Sr, Mg, Ca and Ba and x = 0.01-0.12;
- M_{1-y}Eu_{y}MgAl₁₀O₁₇, in which M is selected from one or more elements from the group Ba, Mg, Ca and Sr and y = 0.01-0.9;
- M_{1-z}Eu_{z}MgAl₁₀O₁₇, in which M is selected from one or more elements from the group Ba, Mg, Ca and Sr and z = 0.01-0.9;
- (M₁₋ₚEuₚ)₆BP₅O₂₀, in which M is selected from one or more elements from the group Sr, Mg, Ca and Ba and p = 0.01-0.9;
- (Sr_{1-q}Eu_{q})₄Al₁₄O₂₅, in which q = 0.01-0.9;
- Mg₄Ge₁₋ᵣMnᵣ(O,F)₆, in which r = 0.001-0.06; or
- M₁₋ₛEuₛ(Mg₁₋ₜMnₜ) Al₁₀O₁₇, in which M is selected from one or more elements from the group Ba, Mg, Ca and Sr, s = 0.01-0.7 and t = 0.05-0.5.

6. Composite material (10) according to one of claims 1 to 5,
**characterized in that**
the matrix (14) comprises glass, silicone, plastics material, in particular polyacrylate, polymethacrylate, polymethyl methacrylate, polycarbonate, epoxy resin, formaldehyde resin, polyacrylonitrile, polyamides, polybutadiene, polyester, polyethene, polyurea, polypropene, polystyrene, polyurethane, polyvinyl chloride and/or polytetrafluoroethylene, ceramics and/or a nonmetallic hybrid polymer material.

7. Composite material (10) according to one of claims 1 to 6,
**characterized in that**
the matrix (14) comprises a filler material, by means of which the refractive index (n_{M}) of the matrix (14) is adjusted to a predetermined value.

8. Display device (16) with at least one support element (18), which comprises at least one composite material (10) according to one of claims 1 to 7 as a layer (20) or constituent of a layer (20).

9. Display device (16) according to claim 8,
**characterized in that**
the support element (18) comprises at least one material from the group comprising glass, silicone, plastics material, in particular polyacrylate, polymethacrylate, polymethyl methacrylate, polycarbonate, epoxy resin, formaldehyde resin, polyacrylonitrile, polyamides, polybutadiene, polyester, polyethene, polyurea, polypropene, polystyrene, polyurethane, polyvinyl chloride and/or polytetrafluoroethylene, ceramics, wood, concrete, stone, metal and/or nonmetallic hybrid polymer materials.

10. Display device (16) according to claim 8 or 9,
**characterized in that**
it comprises at least two support elements (18a, 18b).

11. Display device (16) according to one of claims 8 to 10,
**characterized in that**
it comprises at least two layers (20a, 20b), which consist at least in part of one or more composite materials (10) according to one of claims 1 to 7, wherein the at least two layers (20a, 20b) are arranged next to one another and/or above one another and/or on opposing sides of a support element (18) and/or on different support elements (18a, 18b).

12. Display device (16) according to one of claims 8 to 11,
**characterized in that**
at least one quencher and/or absorber is provided, by means of which light of the excitation wavelength(s) and/or the emission wavelength(s) of at least one photoluminescent material (12) is to be absorbed, and/or in that at least one layer (20) takes the form of an antireflective coating.

13. Display device (16) according to one of claims 8 to 12,
**characterized in that**
it comprises means for injecting light into the photoluminescent material (12) and/or at least one open-and/or closed-loop-controllable lighting device (22), by means of which the photoluminescent material (12) is to be excited.

14. Display device (16) according to claim 13,
**characterized in that**
the lighting device (22) comprises at least one projector and/or at least one laser and/or at least one LED and/or is configured to emit light of different wavelengths.

15. Method for operating a display device (16) according to one of claims 8 to 14, in which the composite material (10) arranged as a layer (20) or constituent of a layer (20) on the support element (18) is exposed to electromagnetic radiation, which comprises at least one excitation wavelength of the photoluminescent material (12) embedded as a light source in the transparent matrix (14).

## Revendications

1. Matériau composite (10) comprenant au moins un matériau photoluminescent (12) qui est incorporé en tant que source lumineuse dans une matrice transparente (14), dans lequel un indice de réfraction (n_{P}) d'au moins un matériau photoluminescent (12) et un indice de réfraction (n_{M}) de la matrice (14) présentent une différence de ±0,2 au maximum, et dans lequel le matériau composite (10) est transparent et incolore dans le domaine spectral visible.

2. Matériau composite (10) selon la revendication 1,
**caractérisé en ce que**
un maximum d'absorption du matériau photoluminescent (12) se situe en dehors du domaine spectral visible par l'être humain.

3. Matériau composite (10) selon la revendication 1 ou 2,
**caractérisé en ce que**
le matériau photoluminescent (12) est constitué de particules présentant un diamètre moyen ≤ 400 nm, en particulier < 100 nm et de préférence < 5 nm, et/ou un diamètre moyen ≥ 800 nm, en particulier > 10 µm et de préférence > 30 µm.

4. Matériau composite (10) selon l'une des revendications 1 à 3,
**caractérisé en ce que**
au moins un matériau photoluminescent (12) est choisi dans un groupe comprenant des substances luminescentes inorganiques, des substances luminescentes organiques et des points quantiques.

5. Matériau composite (10) selon la revendication 4,
**caractérisé en ce que**
le matériau photoluminescent (12) comprend au moins une substance luminescente inorganique issue du groupe
- (M₁₋ₓEuₓ)₁₀(PO₄)₆(Cl, F)₂, dans lequel M est choisi parmi un ou plusieurs éléments du groupe constitué de Sr, Mg, Ca et Ba, et x = 0,01-0,12 ;
- M_{1-y}Eu_{y}MgAl₁₀O₁₇, dans lequel M est choisi parmi un ou plusieurs éléments du groupe constitué de Ba, Mg, Ca et Sr, et y = 0,01-0,9 ;
- M_{1-z}Eu_{z}MgAl₁₀O₁₇, dans lequel M est choisi parmi un ou plusieurs éléments du groupe constitué de Ba, Mg, Ca et Sr, et z = 0,01-0,9 ;
- (M₁₋ₚEuₚ)₆BP₅O₂₀, dans lequel M est choisi parmi un ou plusieurs éléments du groupe constitué de Sr, Mg, Ca et Ba, et p = 0,01-0,9 ;
- (Sr_{1-q}Eu_{q})₄Al₁₄O₂₅, dans lequel q = 0,01-0,9 ;
- Mg₄Ge₁₋ᵣMnᵣ(O,F)₆, dans lequel r = 0,001-0,06 ; ou
- M₁₋ₛEuₛ(Mg₁₋ₜMnₜ)Al₁₀O₁₇, dans lequel M est choisi parmi un ou plusieurs éléments du groupe constitué de Ba, Mg, Ca et Sr, s = 0,01-0,7 et t = 0,05-0,5.

6. Matériau composite (10) selon l'une des revendications 1 à 5,
**caractérisé en ce que**
la matrice (14) comprend du verre, du silicone, du plastique, en particulier du polyacrylate, du polyméthacrylate, du polyméthacrylate de méthyle, du polycarbonate, de la résine époxy, de la résine de formaldéhyde, du polyacrylonitrile, des polyamides, du polybutadiène, du polyester, du polyéthylène, de la polyurée, du polypropylène, du polystyrène, du polyuréthane, du chlorure de polyvinyle et/ou du polytétrafluoroéthène, de la céramique et/ou un matériau polymère hybride non métallique.

7. Matériau composite (10) selon l'une des revendications 1 à 6,
**caractérisé en ce que**
la matrice (14) comprend un matériau de remplissage au moyen duquel l'indice de réfraction (n_{M}) de la matrice (14) est réglé sur une valeur prédéterminée.

8. Dispositif de visualisation (16) avec au moins un élément de support (18) comprenant au moins un matériau composite (10) selon l'une des revendications 1 à 7 en tant que couche (20) ou composant d'une couche (20).

9. Dispositif de visualisation (16) selon la revendication 8,
**caractérisé en ce que**
l'élément de support (18) comprend au moins un matériau issu du groupe constitué de verre, silicone, plastique, en particulier polyacrylate, polyméthacrylate, polyméthacrylate de méthyle, polycarbonate, résine époxy, résine de formaldéhyde, polyacrylonitrile, polyamides, polybutadiène, polyester, polyéthylène, polyurée, polypropylène, polystyrène, polyuréthane, chlorure de polyvinyle et/ou polytétrafluoroéthène, céramique, bois, béton, pierre, matériaux polymères hybrides métalliques et/ou non métalliques.

10. Dispositif de visualisation (16) selon la revendication 8 ou 9,
**caractérisé en ce que**
celui-ci comprend au moins deux éléments de support (18a, 18b).

11. Dispositif de visualisation (16) selon l'une des revendications 8 à 10,
**caractérisé en ce que**
celui-ci comprend au moins deux couches (20a, 20b) qui sont constituées au moins partiellement d'un ou plusieurs matériaux composites (10) selon l'une des revendications 1 à 7, au moins deux couches (20a, 20b) étant juxtaposées et/ou superposées et/ou sur des faces opposées d'un élément de support (18) et/ou sur différents éléments de support (18a, 18b).

12. Dispositif de visualisation (16) selon l'une des revendications 8 à 11,
**caractérisé en ce que**
au moins un extincteur et/ou un absorbeur est prévu, au moyen duquel la lumière de la (des) longueur(s) d'onde d'excitation et/ou de la (des) longueur(s) d'onde d'émission d'au moins un matériau photoluminescent (12) doit être absorbée, et/ou au moins une couche (20) est formée en tant que revêtement antireflet.

13. Dispositif de visualisation (16) selon l'une des revendications 8 à 12,
**caractérisé en ce que**
celui-ci comprend des moyens pour coupler la lumière dans le matériau photoluminescent (12) et/ou au moins un dispositif d'éclairage (22) contrôlable et/ou réglable, au moyen duquel le matériau photoluminescent (12) doit être excité.

14. Dispositif de visualisation (16) selon la revendication 13,
**caractérisé en ce que**
le dispositif d'éclairage (22) comprend au moins un projecteur et/ou au moins un laser et/ou au moins une LED et/ou est conçu pour émettre de la lumière avec différentes longueurs d'onde.

15. Procédé d'exploitation d'un dispositif de visualisation (16) selon l'une des revendications 8 à 14, dans lequel le matériau composite (10) disposé en tant que couche (20) ou composant d'une couche (20) sur l'élément de support (18) est soumis à un rayonnement électromagnétique comprenant au moins une longueur d'onde d'excitation du matériau photoluminescent (12) incorporé en tant que source de lumière dans la matrice transparente (14).
